# EUROPEAN PATENT APPLICATION

(11) **EP 4 242 372 A1**
(43) Date of publication of application: **13.09.2023**
(21) Application number: 21888336.1
(22) Date of filing: 29.09.2021
(51) Int. Cl.: D21B 1/32, D21B 1/34

(54) **METHOD AND DEVICE FOR SEPARATING PRINTING INK AND FIBER BY DRY-PROCESS MAGNETIC FORCE DIFFERENCE COUPLED VIBRATION**

(30) Priority: 06.11.2020 CN 202011232902
(71) Applicant: Li, Xuan, Binhai New Area, Tianjin 300450 (CN)
(72) Inventor: Li, Xuan, Binhai New Area, Tianjin 300450 (CN)
(74) Representative: Cabinet Chaillot
(86) International application number: PCT/CN2021/121569
(87) International publication number: WO 2022/095639

(57) **Abstract**

A method and device for separating a printing ink and a fiber by dry-process magnetic force difference coupled vibration. The device comprises a fiber crushing machine unit (1), a magnetic force difference coupled vibrator (2), an acceleration fan (3), a ballistic rebounding and resorbing device (4), a material settling and conveying pipe (5), and a cylindrical separator (6) which are sequentially connected by means of pipes. According to the method and the device, separation of printing inks and fibers in waste paper can be implemented by means of dry-process magnetic force difference coupled vibration, and recycling of waste paper products is implemented.

## Description

The present invention relates to the field of waste paper recycling devices and methods, and in particular to a method and device for separating printing ink from a fiber by dry-process magnetic force difference coupled vibration.

### BACKGROUND

Paper is an important product closely related to production and life of people, and is closely associated with the natural environment. Waste paper is used as an important renewable resource, and reasonable recycling of the waste paper not only has good economic and social benefits, but also has important significance for environmental protection and resource utilization. The traditional way of recycling waste and recycled paper products (hereinafter collectively referred to as waste paper) is to wash waste paper by water power in a mass scale, followed by precipitating after washing, with carbon powder products and printing inks attached to the waste paper floating on the upper layer of water due to their lighter density relative to water, and with washed fibers depositing on the lower layer of water due to swelling and their higher density relative to water, so that the waste paper subjected to water treatment is usually deinked by a method (namely flotation) of skimming the carbon powder products and the printing inks suspended on the upper layer of water; or the fiber pulp is separated from the printing inks by centrifuging and screening with water power or by adsorbing the printing inks in the fiber pulp by magnetic forces using various direct-contact type methods. Such methods for recycling waste paper have been used for hundreds of years since the beginning of industrial paper industry and have the advantages that the principle of operation device is simple, the quality of the resulting processed fibers is stable, but have obvious defects that a large amount of fresh water and even clear water resources are needed in the processing process, and the environment and the place for using the device also have mandatory requirements; in order to reduce the cost, in the traditional waste paper processing, the waste water and waste materials generated in the production process are directly discharged into rivers and air under without any supervision, and the waste water and waste materials cannot be recycled through refining treatment. At present, some researches on methods and devices for recycling waste paper by dry-process have been made, wherein the methods can be classified into laser treatment methods, and traditional air separation methods. For example, the patent JP11-133822A discloses a device for removing printing ink from recycled waste paper, wherein the evaporated ink is sucked by a suction apparatus, but this method is only effective to the waste paper printed by laser; this method has the advantages that the imprints printed on paper and paper products can be removed without decomposing the paper or the products; by means of laser which identifies the printing ink on the paper clearly for subsequent evaporation of the printing ink, the laser separation method generates selective photo-pyrolysis effect so that the ink molecules printed on the paper are actively broken down and loosened, but such effect is limited, and the device is only effective to laser printing products, and is ineffective or has no obvious effect on the ink printed and written waste paper. In JP1975069306, an air separation method is disclosed, which mainly disintegrates waste paper into fibers under an anhydrous state, thus also disintegrating coloring materials printed on the paper during the process, and then separates the coloring materials from the fibers by utilizing the difference between the weight of the coloring materials in the disintegrated state and the weight of the fibers in the disintegrated state; this method is only mainly used for waste paper printed with carbon-powder type laser, in addition, UV ink having a relatively high coloring material density cannot be physically removed according to this method, since the weight of the coloring materials with a high density is similar to that of the disintegrated fibers, the coloring materials are not easy to be separated in the air, therefore the coloring materials are easy to intertwine with the disintegrated fibers and affect the quality of the treated paper fibers, and as a result, the paper product produced from fibers in the method is further required to be bleached or be subjected to color covering. CN101736635 and EP659932A disclose various magnetic devices used to directly contact the water-soluble fiber pulp by stirring, adding magnetic seeds into the pulp, filtering and the like, and the printing ink in the pulp is magnetically adsorbed through various structural applications. However, in the actual production process, the magnetic field of the method cannot be quantitatively estimated, wherein an excessive magnetic field will affect the operation and use of the entire paper-making and pulping device, and insufficient magnetic field will render the printing ink removal ineffective in a way that subsequent fiber bleaching and washing procedures are necessary.

### SUMMARY

Aiming at the above problems, the present invention provides a method and device for separating printing inks from fibers by dry-process magnetic force difference coupled vibration, which adopts the principle that the ink materials in the fibers are not directly contacted and adsorbed by an aqueous solution medium, but the ink materials are separated from the fibers through coupled vibration of the ink materials under the effect of different magnetic fields, such that ink molecules are separated from the fibers under dry condition, and the ink molecules can flow along a direction in accordance with their physical vibration, in contrast to a flow of the fibers which flows differently compared with the ink molecules, thereby achieving the effect of separating the ink materials from the fibers.

In order to achieve the above objectives, the method and the device for separating printing inks from fibers by dry-process magnetic force difference coupled vibration are achieved by the following technical solution:
A device for separating printing inks and fibers by dry-process magnetic force difference coupled vibration, comprising a fiber crusher, a magnetic force difference coupled vibrator, an accelerating fan, a ballistic rebound sucker, a material settling and conveying pipe, and a cylindrical separator which are sequentially connected through pipelines, wherein a magnetic conductive iron sheet, a homopolar near-frequency magnetic conductive iron sheet, and a magnetic shielding structure which are sequentially connected through continuous iron bars and coils 23 are arranged in a center of a shell of the magnetic force difference coupled vibrator from a fiber inlet to a fiber outlet of the shell of the magnetic force difference coupled vibrator; a vibration domain is formed in an empty cavity in the shell of the magnetic force difference coupled vibrator; temperature controllers and thermostats are arranged on an outer side of the shell of the magnetic force difference coupled vibrator; a middle part of the ballistic rebound sucker is connected to the accelerating fan through an accelerating tube; printing ink rebound ballistic path baffles and ballistic rebound plates are arranged in sequence from a middle part of a shell of the ballistic rebound sucker towards an upper part of the shell of the ballistic rebound sucker; a heavy ink recycling apparatus communicates with an interior of the shell of the ballistic rebound sucker through a sucker fan disposed on the upper part of the shell of the ballistic rebound sucker; a fiber resistance plate is downwardly arranged from the middle part of the shell of the ballistic rebound sucker; the cylindrical separator communicates with the interior of the shell of the ballistic rebound sucker through the material settling and conveying pipe; a disc fan collector is arranged on an upper part of a shell of the cylindrical separator; a fiber discharge port is formed on a lower part of the shell of the cylindrical separator, and the fiber discharge port communicates with a collector.

A magnetic conductive sheet and a homopolar near-frequency magnetic conductive iron sheet which generate magnetic fields K1 and K2 respectively are provided inside the magnetic force difference coupled vibrator. Numbers of iron bars and coils of the continuous iron bars and coils provided inside the magnetic force difference coupled vibrator are increased or decreased according to a required magnetic force vibration range, so that ink material particles are subject to coupled vibration at the vibration domain in accordance with normal mode vibration generated by the different magnetic fields. The vibration domain is provided inside the magnetic force difference coupled vibrator, such that the ink material particles are coupled and delocalized in the vibration domain. An outer side of the shell of the magnetic force difference coupled vibrator is provided with temperature controllers and thermostats to maintain a temperature of the magnetic force difference coupled vibrator, and when weak magnetic mixture is treated with a magnetic force, a temperature of a treated object is increased, so that a viscosity of the treated object can be reduced.

The magnetic shielding structure is provided inside the magnetic force difference coupled vibrator, such that the ink material particles are no longer subject to perturbation by different normal mode vibration in the different magnetic fields, and the ink material particles still vibrating in coupled vibration due to inertia will enter to the next area; the acceleration tube is arranged in the middle part of the ballistic rebound sucker, and the ink material particles still vibrating in coupled vibration due to inertia and the fibers enter the ballistic rebound sucker through the accelerating tube at a consistent initial speed Vo. The fiber resistance plate is downwardly arranged from the middle part of the shell of the ballistic rebound sucker, and the fiber resistance plate enables the fibers to move parabolically and then to descend and spirally move to enter the material settling and conveying pipe.

The material settling and conveying pipe feeds the fibers discharged from the ballistic rebound sucker into the cylindrical separator. The disc fan collector is arranged on the upper part of the shell of the cylindrical separator, and the collector and the fiber discharge port are formed on the lower part of the shell of the cylindrical separator.

Preferably, the fiber crusher is a disc mill crusher having a fixed knife and a movable knife rotor inside. Waste papers put inside the fiber crusher are beaten through mutual rotation between the fixed knife and the movable knife rotor to obtain uniform dry fibers and extremely fine ink material particles.

Preferably, more than two of said printing ink rebound ballistic path baffles are arranged in the ballistic rebound sucker, a plurality of said printing ink rebound ballistic path baffles block an air flow from advancing linearly and from moving parabolically. When a flowing direction of the air flow carrying the ink material particles and fibers turns rapidly upon impact with the printing ink rebound ballistic path baffles, the ink material particles are allowed to be diverted to the ballistic rebound plates along ballistic trajectories thereof.

Preferably, more than two of said ballistic rebound plates are arranged on the upper part of the shell of the ballistic rebound sucker, and the ballistic rebound plates are designed according to calculable motion trajectories of the ink material particles, such that flow directions of the ink material particles are rapidly changed due to resistance imposed by conical covers of the ballistic rebound plates, and the ink material particles are sucked into the heavy ink recycling apparatus through the sucker fan after rebounding along their rebound ballistic paths.

A method for separating printing inks from fibers by dry-process magnetic force difference coupled vibration, comprising the following steps:
step 1, putting waste paper products into a fiber crusher to crush the waste paper products;
step 2, feeding the waste paper products crushed being a mixture of fibers and ink material particles into a magnetic force difference coupled vibrator through a conveying pipe and an accelerating fan, wherein the magnetic force difference coupled vibrator is provided with a fiber inlet which is connected to the fiber crusher through the conveying pipe;
step 3, subjecting the ink material particles in the mixture to magnetic forces created by a magnetic conductive iron sheet and a homopolar near-frequency magnetic conductive iron sheet disposed inside the magnetic force difference coupled vibrator and thus generate normal mode vibration when the mixture passes through the magnetic conductive iron sheet and the homopolar near-frequency magnetic conductive iron sheet, wherein the magnetic conductive iron sheet and the homopolar near-frequency magnetic conductive iron sheet give out magnetic fields of K quantity respectively; the magnetic conductive iron sheet and the continuous iron bars and coils at a front part of the magnetic force difference coupled vibrator between the magnetic conductive iron sheet and the homopolar near-frequency magnetic conductive iron sheet are subject to a homopolar magnetic field L1, the homopolar near-frequency magnetic conductive iron sheet and the continuous iron bars and coils at a rear part of the magnetic force difference coupled vibrator between the homopolar near-frequency magnetic conductive iron sheet and the magnetic shielding structure are subject to another homopolar magnetic field L2; L1 and L2 are homopolar near-frequency magnetic fields; when the ink material particles pass through the magnetic fields with near frequencies, the ink material particles are subject to coupled vibration in a vibration domain inside the magnetic force difference coupled vibrator; arranging temperature controllers and thermostats on an outer side of a shell of the magnetic force difference coupled vibrator to maintain a temperature of the magnetic force difference coupled vibrator, wherein when a weak magnetic mixture is treated with a magnetic force, a temperature of a treated object is increased, so that a viscosity of the treated object can be reduced; the ink material particles are subject to coupled vibration due to normal mode vibration generated by the magnetic fields in the vibration domain, while the fibers continue to enter a magnetic shielding structure according to a flowing path of air flow.
step 4, magnetically shielding, by the magnetic shielding structure, the magnetic conductive iron sheet and the homopolar near-frequency magnetic conductive iron sheet, such that the ink material particles are no longer subject to perturbation by different normal mode vibration in the magnetic fields, but the coupled vibration of the ink material particles are partially maintained due to inertia; arranging an acceleration tube in a middle part of a ballistic rebound sucker, and the ink material particles still partially subject to coupled vibration due to inertia and the fibers enter the ballistic rebound sucker through the accelerating tube; in the ballistic rebound sucker, due to a sucker fan and printing ink rebound ballistic path baffles arranged on an upper part of the ballistic rebound sucker, the air flow is blocked from advancing linearly and from moving parabolically by using the printing ink rebound ballistic path baffles, when a flowing direction of the air flow carrying the ink material particles and the fibers turns rapidly upon impact with the printing ink rebound ballistic path baffles, fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates and suction force of the sucker fan arranged on the upper part of the ballistic rebound sucker, while ink material particles which are lighter compared with ascended ink material particles and remaining fibers are subjected to downward spiral sedimentation movement along a fiber resistance plate; further, flow directions of the ink material particles with inertia coupled vibration and the slight amount of fibers ascending to the upper part of the ballistic rebound sucker are rapidly changed due to resistance of conical covers of the ballistic rebound plates, and simultaneously, due to an increase in cross section of a flow of the ascended ink material particles with inertia coupled vibration mixed with the slight amount of fibers, a cross sectional flow rate of the flow of the ascended ink material particles with inertia coupled vibration mixed with the slight amount of fibers is reduced sharply, and so the slight amount of fibers are separated from the ascended ink material particles with inertia coupled vibration under gravity and drop onto the ballistic rebound plates or the fiber resistance plate, allowing the ascended ink material particles with inertia coupled vibration to continue to ascend; wherein use of the ballistic rebound plates separates the fibers from the ink material particles in the ballistic rebound sucker; and
step 5, collecting the ascended ink material particles with inertia coupled vibration in a heavy ink recycling apparatus, while descending fibers enters a cylindrical separator through a material settling and conveying pipe; adjusting an air pressure in the cylindrical separator through a disc fan collector arranged on an upper part of the cylindrical separator; by centrifugal force in the cylindrical separator, discharging lighter impurities or materials of the fibers through the disc fan collector arranged on the upper part of the cylindrical separator; and settling heavier fibers into a lower fiber discharge port, wherein a whole process from said step 1 to step 5 is carried out in a dry environment, and thus resulting fibers with a higher purity are obtained.

The technical principle of the present invention is as follows:
The present invention provides a method and device for separating ink molecules and coloring material molecules from fibers by magnetic force difference coupled vibration, which adopts the principle that the ink materials in the fibers are not directly contacted and adsorbed by an aqueous solution medium, but the ink materials are separated from the fibers through coupled vibration of the ink materials under the effect of different magnetic fields, such that ink molecules are separated from the fibers under dry condition, and the ink molecules can flow along a direction in accordance with their physical vibration, in contrast to a flow of the fibers which flows differently compared with the ink molecules, thereby achieving the effect of separating the ink materials from the fibers.

No matter if it is a laser-printing powdered ink or other printing inks, the coloring materials are made up of mineral particles, and most of the black and red coloring materials consist of needle-shaped crystal particles smaller than 1 micron, so the coloring material particles can be magnetized and positioned in a pattern in accordance with the magnetic field, or vibrate under the influence of magnetic field vibration when they are under magnetic field treatments. The fibers are high molecular materials, and their particle size is far larger than that of the printing ink crystal particles, and thus obvious magnetic field forced movements of the fibers can only occur under a stronger magnetic field. According to the present invention, through the magnetic force difference coupled vibrator, the magnetic force difference coupled vibration generated will cause the coloring materials and the fibers to have different calculable motion trajectories, and thus the coloring materials and the fibers are separated from each other due to the deviation of their motion trajectories; further, through the ballistic rebound sucker that follows the magnetic force difference coupled vibrator to capture the inertia vibration trajectories of the ink material particles, the ink material particles that are accelerated and sent from the magnetic force difference coupled vibrator to the ballistic rebound sucker enter the ballistic rebound sucker where the ink material particles which are heavier and larger are collected, and the residual fibers and lighter ink material particles are allowed to enter the cylindrical separator for further separation. By means of the magnetic force difference coupled vibration, the trajectories of ink material particles can be captured by calculation, and the ink material particles can be separated from the fibers without influencing the fibers property.

The magnetic force difference coupled vibration is different from conventional magnetic adsorption principle. Magnetic adsorption needs a strong enough magnetic field to fully attract the ink material particles, but the parameters thereof cannot be quantified, and in addition, excessive magnetic field affects the operation and use of the whole paper-making and pulping device, and insufficient magnetic field hinders the ink material particles from being effectively removed, resulting in the necessity of subsequent fiber bleaching and washing procedures; moreover, in the conventional magnetic adsorption methods, water as a medium is needed, and usually a medicament or an additive (such as magnetic seeds) has to be added as well, such addition of the medicament and additive and the long-time contact with magnetic rods during the conventional processes will cause impurities, however not the ink material particles, to intertwine with the fibers in the swelling process of the fibers, and hence leading to contamination of the fibers, and the acid-base properties of the residual substances will also directly affect the fiber quality. Therefore, dry separation of the ink molecules and the coloring material molecules is implemented by using the magnetic force difference coupled vibration according to the present invention, as a result, deinking time is shortened, deinking efficiency and effect are both improved, and paper fibers with a higher quality are obtained.

The working principle of the present invention is as follows:
Waste paper products are put into the fiber crusher to be crushed into fibers, where the water paper products are beaten through mutual rotation of the fixed knife and the movable knife rotor to obtain uniform dry fibers and extremely fine ink material particles, and frictional forces are imposed on the fibers during the process. Due to said frictional forces, the fibers and the ink material particles will generate a certain temperature W to allow preliminary break-down and loosening of the ink material particles. The conveying pipe and the accelerating fan are used to feed a mixture with a certain temperature W containing the dry fibers and the extremely fine ink material particles into the magnetic force difference coupled vibrator. The fiber inlet of the magnetic force difference coupled vibrator is connected with said conveying pipe. Magnetic conductive iron sheets are provided in the magnetic force difference coupled vibrator, and the magnetic conductive iron sheets generate magnetic fields of K quantity through programmed control, so that the ink material particles in the mixture passing through the magnetic conductive iron sheets are affected by magnetic induction to generate normal mode vibration. The magnetic conductive iron sheet and the continuous iron bars and coils at a front part of the magnetic force difference coupled vibrator between the magnetic conductive iron sheet and the homopolar near-frequency magnetic conductive iron sheet are subject to a homopolar magnetic field L1; the homopolar near-frequency magnetic conductive iron sheet and the continuous iron bars and coils at a rear part of the magnetic force difference coupled vibrator between the homopolar near-frequency magnetic conductive iron sheet and the magnetic shielding structure are subject to another homopolar magnetic field L2, L1 and L2 are homopolar near-frequency magnetic fields. When the ink material particles pass through the two magnetic fields with near frequencies, the ink material particles will receive perturbation due to the different normal mode vibration generated in the two magnetic fields, and thus subject to coupled vibration in the vibration domain. A temperature of the magnetic force difference coupled vibrator is maintained by the temperature controllers and the thermostats provided on the outer side of the shell of the magnetic force difference coupled vibrator. When weak magnetic mixture is treated with a magnetic force, a temperature of a treated object is increased, so that a viscosity of the treated object can be reduced. At this moment, in the mixture of fibers and the ink material particles which have already been broken down and loosened, the spectral band of the ink material particles will be divided into two parts, or the spectral band of the ink material particles is divided into two parts due to their slitting with the fibers. The ink material particles are subject to coupled vibration due to normal mode vibration in the vibration domain, while the fibers continue to enter a next area according to the flowing path of the air flow. The magnetic shielding structure magnetically shields the previous magnetic conductive iron sheet and the homopolar near-frequency magnetic conductive iron sheet, such that the ink material particles are no longer subject to perturbation by different normal mode vibration in the two magnetic fields, and the ink material particles still vibrating in weak coupled vibration due to inertia will enter to the next area; the acceleration tube is arranged in the middle part of the ballistic rebound sucker, and the ink material particles still vibrating in weak coupled vibration due to inertia and the fibers enter the ballistic rebound sucker through the accelerating tube; the ink material particles accelerate forwards with inertia coupled vibration, while the fibers only accelerate to move parabolically under the action of gravity and the accelerated air flow created by the accelerating tube, and since the ink material particles are lighter than the fibers, the ink material particles accelerate forwards in a microwave form, and will be affected by the sucker fan and the printing ink rebound ballistic path baffles in the ballistic rebound sucker, wherein one or more of the printing ink rebound ballistic path baffles are used for blocking the air flow from advancing linearly and from moving parabolically, wherein when a flowing direction of the air flow carrying the ink material particles and fibers turns rapidly upon impact with the printing ink rebound ballistic path baffles, fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates and the suction force by the sucker fan arranged on the upper part of the ballistic rebound sucker, while also ink particles lighter and not ascended as the ink particles described above and the remaining fibers are subjected to downward spiral sedimentation movement along the fiber resistance plate; further, flow directions of the ink material particles with inertia coupled vibration and the slight amount of fibers ascending to the upper part of the ballistic rebound sucker are rapidly changed due to resistance of the conical covers of the ballistic rebound plates, and simultaneously, due to an increase in cross section of a flow of the ascending ink material particles with inertia coupled vibration mixed with the slight amount of fibers, a cross sectional flow rate of the flow of the ascending ink material particles with inertia coupled vibration mixed with the slight amount of fibers is reduced sharply, and so the slight amount of fibers are separated from the ink material particles with inertia coupled vibration under the action of gravity and drop onto the ballistic rebound plates or the fiber resistance plate, allowing the ink material particles with inertia coupled vibration to continue to ascend; by means of the one or more ballistic rebound plates, the fibers and the ink material particles with inertia coupled vibration are preliminarily separated in the ballistic rebound sucker, and the ink material particles with inertia coupled vibration also enter the heavy ink recycling apparatus, and the fiber resistance plate arranged on a lower part of the ballistic rebound sucker enables the fibers to move parabolically and then to descend and spirally move to enter the material settling and conveying pipe; the descending fibers enter the cylindrical separator 6 through the material settling and conveying pipe, an air pressure in the cylindrical separator is adjusted through the disc fan collector arranged on the upper part of the cylindrical separator; by means of a centrifugal force, even lighter impurities or remaining ink material particles in the descending fibers are discharged through the disc fan collector arranged on the upper part of the cylindrical separator, while the descending fibers which are heavier than said impurities and the remaining ink material particles are settle and enter into the fiber discharge port formed on the lower part of the cylindrical separator. The entire process described above is carried out under dry condition, and fibers with a higher purity can be obtained.

The present invention has the following beneficial effects:
(1) The conventional water-pulp magnetic adsorption is different from the dry-process magnetic force difference coupled vibration of the present invention in that the viscous flow area is too large in the conventional magnetic adsorption process which affects the yield rate of the resulting fibers and separation of the ink materials from the fibers. However, by means of the dry-process magnetic force coupled vibration, deinking is achieved without an aqueous solution medium which may otherwise affect the property and quality of the resulting fibers.
(2) By means of magnetic force difference coupled vibration to treat the crushed fibers and ink materials, mineral components in ink materials, no matter if they are from carbon powder ink materials or printing inks or water soluble inks or other ink materials, can be subjected to perturbation by the magnetic fields generated in the magnetic force difference coupled vibrator, and thus the ink materials and the fibers will be separated or slitted due to coupled vibration, and a spectral band of the ink materials is divided into two parts, and the ink material particles vibrate in accordance with normal mode vibration. The dry-process magnetic force difference coupled vibration is different from the conventional water-pulp magnetic adsorption which needs an unquantifiable strong magnetic field which may otherwise affect the operation system and the operation of adjacent devices.
(3) By means of the magnetic force difference coupled vibrator, the ink material particles can generate calculable motion trajectories, and a trajectory capturing device is designed for collecting the ink materials.
(4) By means of the structural designs in the ballistic rebound sucker, ink material particles still having coupled vibration due to inertia are captured, such that the motion trajectories of the ink material particles are different from the motion trajectories of the fibers or the slitting trajectories of heavy ink particles. The ink material particles are allowed to follow their rebound ballistic paths according to the ballistic trajectories thereof, and thus the purpose of separating most of the ink materials from the fibers is achieved.
(5) A temperature of the magnetic force difference coupled vibrator is maintained by the thermostats, and when weak magnetic mixture is treated with a magnetic force, a temperature of a treated object is increased, and a viscosity of the treated object can be reduced.
(6) The deinking time of the fibers is shortened under the action of centrifugal force in the cylindrical separator, and light-weight separation is thus carried out to improve the deinking effect.
(7) The ballistic rebound sucker mainly aims at the separation of heavy ink materials, and the cylindrical separator aims at the separation of light ink materials, so that the fibers with a higher purity are obtained.

### BRIEF DESCRIPTION OF THE DRAWINGS

FIG. 1 is a structural diagram of the whole device for separating ink molecules and coloring material molecules from fibers by means of magnetic force difference coupled vibration according to the present invention;
FIG. 2 is a structural diagram of the magnetic force difference coupled vibrator according to the present invention;
FIG. 3 is a test results of the qualities of the resulting fibers obtained according to the embodiments of the present invention;FIG. 4 is a schematic diagram of several different magnetic separation apparatus for separating ink materials from fibers according to conventional methods illustrated in an embodiment of the present invention; and
FIG. 5 shows the test results of recycled paper products made of fibers obtained according to different separating methods to separate ink materials and fibers.

In the figures: 1. fiber crusher; 2. magnetic force difference coupled vibrator; 3. accelerating fan; 4. ballistic rebound sucker; 5. material settling and conveying pipe; 6. cylindrical separator; 11. fixed knife; 12. movable knife rotor; 13. conveying pipe; 21. magnetic conductive iron sheet; 22. fiber inlet; 23. continuous iron bars and coils; 24. homopolar near-frequency magnetic conductive iron sheet; 25. magnetic shielding structure; 26. vibration domain; 27. temperature controller; 28. thermostat; 29. fiber outlet; 41. accelerating tube; 42. printing ink rebound ballistic path baffle; 43. ballistic rebound plate; 44. sucker fan; 45. heavy ink recycling apparatus; 46. fiber resistance plate; 47. outer shell; 61. disc fan collector; 62. fiber discharge port; 63. collector.

### DETAILED DESCRIPTION

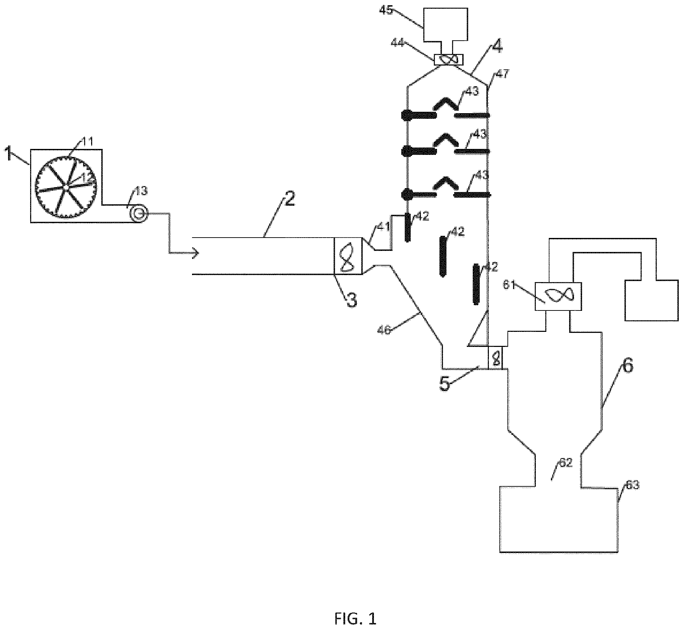

The present invention will be described in detail with reference to the following embodiments and FIGs. 1-5, wherein the described embodiments are intended to illustrate only some, but not all, embodiments of the present invention. These embodiments are intended to illustrate the present invention, but not to limit the scope of the present invention.

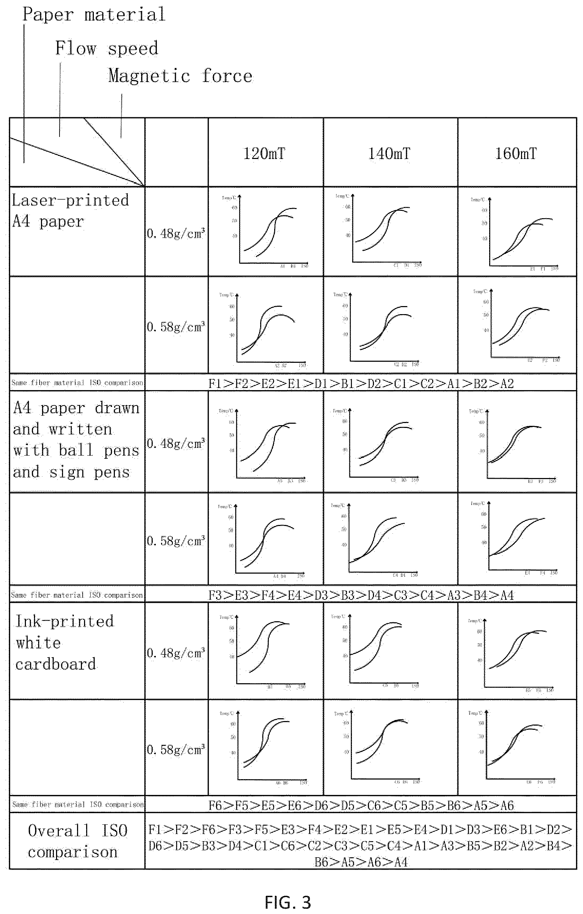

In the test results, the fibers are made into sheets using a sheet former, the measurement is carried out using a whiteness tester and a chromatograph analyzer, and the deinking effect is determined using the ratio of the printing ink amount before and after magnetic separation. The test results are shown in FIGs. 3, 4 and 5.

### Embodiment 1:

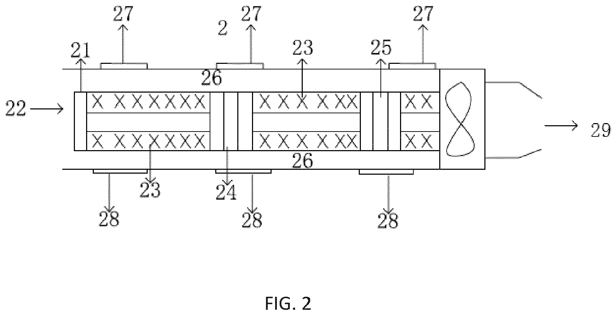

Referring to FIGs. 1 and 2, provided is a device for separating printing inks and fibers by dry-process magnetic force difference coupled vibration, comprising a fiber crusher 1, a magnetic force difference coupled vibrator 2, an accelerating fan 3, a ballistic rebound sucker 4, a material settling and conveying pipe 5, and a cylindrical separator 6 which are sequentially connected through pipelines, wherein a magnetic conductive iron sheet 21, a homopolar near-frequency magnetic conductive iron sheet 24, and a magnetic shielding structure 25 which are sequentially connected through continuous iron bars and coils 23 are arranged in a center of a shell of the magnetic force difference coupled vibrator 2 from a fiber inlet 22 to a fiber outlet 29 of the shell, a vibration domain 26 is formed in an empty cavity in the shell of the magnetic force difference coupled vibrator 2, temperature controllers 27 and thermostats 28 are arranged on an outer side of the shell, a middle part of the ballistic rebound sucker 4 is connected to the accelerating fan 3 through an accelerating tube 41, printing ink rebound ballistic path baffles 42 and ballistic rebound plates 43 are arranged in sequence from a middle part of a shell of the ballistic rebound sucker 4 towards an upper part of the shell of the ballistic rebound sucker 4, a heavy ink recycling apparatus 45 communicates with an interior of the shell of the ballistic rebound sucker 4 through a sucker fan 44 disposed on the upper part of the shell of the ballistic rebound sucker 4, a fiber resistance plate 46 is downwardly arranged from the middle part of the shell of the ballistic rebound sucker 4, the cylindrical separator 6 communicates with the interior of the shell of the ballistic rebound sucker 4 through the material settling and conveying pipe 5, a disc fan collector 61 is arranged on an upper part of a shell of the cylindrical separator 6, a fiber discharge port 62 is formed on a lower part of the shell of the cylindrical separator 6, and the fiber discharge port 62 communicates with a collector 63.

In the embodiment, the fiber crusher 1 is a disc mill crusher having a fixed knife and a movable knife rotor inside, and uniform dry fibers and extremely fine ink material particles of the paper are obtained by beating effect through mutual rotation between the fixed knife 11 and the movable knife rotor 12 in the disc mill crusher.

In the embodiment, three printing ink rebound ballistic path baffles 42 are arranged in the ballistic rebound sucker 4, one or more of the printing ink rebound ballistic path baffles 42 block an air flow from advancing linearly and from moving parabolically, and as a flowing direction of the air flow carrying the ink material particles and fibers turns rapidly upon impact with one or more of the printing ink rebound ballistic path baffles 42, the ink material particles are allowed to be diverted to the ballistic rebound plates 43 along ballistic trajectories thereof.

In the embodiment, an upper part of the ballistic rebound sucker 4 is provided with three ballistic rebound plates 43, and the ballistic rebound plates 43 are designed according to a calculable motion trajectories of the ink material particles, such that flow directions of the ink material particles are rapidly changed due to resistance imposed by conical covers of the ballistic rebound plates 43, and the ink material particles are sucked into the heavy ink recycling apparatus 45 through the sucker fan 44 after rebounding along their rebound ballistic paths.

According to practical implementation of the embodiment, 200 g of laser-printed A4 paper is put into the fiber crusher 1, paper fibers of the paper are beaten through mutual rotation of the fixed knife 11 and the movable knife rotor 12 to obtain uniform dry fibers and extremely fine ink material particles, and frictional forces are imposed on the paper fibers during the process. Due to said frictional forces, the fibers and the ink material particles will generate a certain temperature W (read by a temperature sensor), wherein the temperature is below an ignition point of the fibers, but sufficient to allow preliminary break-down and loosening of the ink material particles. The accelerating fan 3 is used for feeding a mixture with a certain temperature W1 containing the dry fibers and the extremely fine ink material particles into the magnetic force difference coupled vibrator 2 through a conveying pipe 13. The magnetic conductive iron sheet 21 of the magnetic force difference coupled vibrator 2 generate a magnetic induction density with K quantity (magnetic density is controlled to be 100 mT-200 mT), and the magnetic fields are maintained by the continuous iron bars and coils 23. When weak magnetic mixture is treated with a magnetic force, a temperature of a treated object is increased, so that a viscosity of the treated object can be reduced, meanwhile, a temperature of the magnetic force difference coupled vibrator 2 is maintained by the temperature controllers 27 and the thermostats 28. The ink material particles in the mixture passing through the vibration domain 26-1 is affected by magnetic induction to generate normal mode vibration Z1, the magnetic conductive iron sheet 21 and the continuous iron bars and coils 23 at a front part of the magnetic force difference coupled vibrator 2 between the magnetic conductive iron sheet 21 and the homopolar near-frequency magnetic conductive iron sheet 24 are subject to a homopolar magnetic field L1, the homopolar near-frequency magnetic conductive iron sheet 24 and the continuous iron bars and coils 23 at a rear part of the magnetic force difference coupled vibrator 2 between the homopolar near-frequency magnetic conductive iron sheet 24 and the magnetic shielding structure 25 are subject to another homopolar magnetic field L2, L1 and L2 are homopolar near-frequency magnetic fields, when the ink material particles pass through the two magnetic fields with near frequencies, the ink material particles will receive perturbation due to the different normal mode vibration generated in the two magnetic fields, and thus subject to coupled vibration. At this moment, in the mixture of fibers and the ink material particles which have already been broken down and loosened, the spectral band of the ink material particles will be divided into two parts, or the spectral band of the ink material particles is divided into two parts due to their slitting with the fibers. The ink material particles are subject to coupled vibration due to normal mode vibration in the vibration domain, while the fibers continue to enter a next area according to the flowing path of the air flow. The magnetic shielding structure 25 magnetically shields the previous magnetic conductive iron sheet 21 and the homopolar near-frequency magnetic conductive iron sheet 24, such that the ink material particles are no longer subject to perturbation by different normal mode vibration in the two magnetic fields; the acceleration tube 41 is arranged in the middle part of the ballistic rebound sucker 4, and the ink material particles still vibrating in weak coupled vibration due to inertia and the fibers enter the ballistic rebound sucker 4 through the accelerating tube 41; the ink material particles accelerate forwards with inertia coupled vibration, while the fibers only accelerate to move parabolically under the action of gravity and the accelerated air flow created by the accelerating tube 41, and since the ink material particles are lighter than the fibers, the ink material particles and the fibers will be divided following perturbation and mutual impact and move in different paths, and by means of the sucker fan 44 and the printing ink rebound ballistic path baffles 42, the ink material particles accelerate forwards in a microwave form, with a frequency similar to the vibration frequency of the magnetic field L1. Three printing ink rebound ballistic path baffles 42 are used for blocking the air flow from advancing linearly and from moving parabolically, wherein when a flowing direction of the air flow carrying the ink material particles and fibers turns rapidly upon impact with the printing ink rebound ballistic path baffles 42, fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates 43 and the suction force by the sucker fan 44 arranged on the upper part of the ballistic rebound sucker 4, while ink material particles which are lighter and not ascended as the ink particles described above and also remaining fibers are subjected to downward spiral sedimentation movement along the fiber resistance plate 46; further, flow directions of the ink material particles with inertia coupled vibration and the slight amount of fibers ascending to the upper part of the ballistic rebound sucker 4 are rapidly changed due to resistance of the conical covers of the ballistic rebound plates 43, and simultaneously, due to an increase in cross section of a flow of the ascending ink material particles with inertia coupled vibration mixed with the slight amount of fibers, a cross sectional flow rate of the flow of the ascending ink material particles with inertia coupled vibration mixed with the slight amount of fibers is reduced sharply, and so the slight amount of fibers are separated from the ink material particles with inertia coupled vibration under the action of gravity and drop onto the ballistic rebound plates 43 or the fiber resistance plate 46, allowing the ink material particles with inertia coupled vibration to continue to ascend; by means of the three ballistic rebound plates 43, the fibers and the ink material particles with inertia coupled vibration are preliminarily separated in the ballistic rebound sucker 4, and the ink material particles with inertia coupled vibration also enter the heavy ink recycling apparatus 45, and the fiber resistance plate 46 is arranged on a lower part of the ballistic rebound sucker 4, and the fiber resistance plate 46 enables the fibers to move parabolically and then to descend and spirally move to enter the material settling and conveying pipe 5; the descending fibers enter the cylindrical separator 6 through the material settling and conveying pipe 5, an air pressure in the cylindrical separator 6 is adjusted through the disc fan collector 61 arranged on the upper part of the cylindrical separator 6; by means of a centrifugal force, even lighter impurities or remaining ink material particles in the descending fibers are discharged and collected through the disc fan collector 61 arranged on the upper part of the cylindrical separator 6, while the descending fibers which are heavier than said impurities and the remaining ink material particles are settle and enter into the fiber discharge port 62 formed on the lower part of the cylindrical separator 6 and then being collected by the collector 63, and thus the fibers A-E with a higher purity are obtained.

### Embodiment 2:

Referring to FIGs. 1 and 2, provided is a device for separating printing inks and fibers by dry-process magnetic force difference coupled vibration, comprising a fiber crusher 1, a magnetic force difference coupled vibrator 2, an accelerating fan 3, a ballistic rebound sucker 4, a material settling and conveying pipe 5, and a cylindrical separator 6 which are sequentially connected through pipelines, wherein a magnetic conductive iron sheet 21, a homopolar near-frequency magnetic conductive iron sheet 24, and a magnetic shielding structure 25 which are sequentially connected through continuous iron bars and coils 23 are arranged in a center of a shell of the magnetic force difference coupled vibrator 2 from a fiber inlet 22 to a fiber outlet 29 of the shell, a vibration domain 26 is formed in an empty cavity in the shell of the magnetic force difference coupled vibrator 2, temperature controllers 27 and thermostats 28 are arranged on an outer side of the shell, a middle part of the ballistic rebound sucker 4 is connected to the accelerating fan 3 through an accelerating tube 41, printing ink rebound ballistic path baffles 42 and ballistic rebound plates 43 are arranged in sequence from a middle part of a shell of the ballistic rebound sucker 4 towards an upper part of the shell of the ballistic rebound sucker 4, a heavy ink recycling apparatus 45 communicates with an interior of the shell of the ballistic rebound sucker 4 through a sucker fan 44 disposed on the upper part of the shell of the ballistic rebound sucker 4, a fiber resistance plate 46 is downwardly arranged from the middle part of the shell of the ballistic rebound sucker 4, the cylindrical separator 6 communicates with the interior of the shell of the ballistic rebound sucker 4 through the material settling and conveying pipe 5, a disc fan collector 61 is arranged on an upper part of a shell of the cylindrical separator 6, a fiber discharge port 62 is formed on a lower part of the shell of the cylindrical separator 6, and the fiber discharge port 62 communicates with a collector 63.

In the embodiment, the fiber crusher 1 is a disc mill crusher having a fixed knife and a movable knife rotor inside, and uniform dry fibers and extremely fine ink material particles of the paper are obtained by beating effect through mutual rotation between the fixed knife 11 and the movable knife rotor 12 in the disc mill crusher.

In the embodiment, three printing ink rebound ballistic path baffles 42 are arranged in the ballistic rebound sucker 4, one or more of the printing ink rebound ballistic path baffles 42 block an air flow from advancing linearly and from moving parabolically, and as a flowing direction of the air flow carrying the ink material particles and fibers turns rapidly upon impact with one or more of the printing ink rebound ballistic path baffles 42, the ink material particles are allowed to be diverted to the ballistic rebound plates 43 along ballistic trajectories thereof.

In the embodiment, an upper part of the ballistic rebound sucker 4 is provided with three ballistic rebound plates 43, and the ballistic rebound plates 43 are designed according to a calculable motion trajectories of the ink material particles, such that flow directions of the ink material particles are rapidly changed due to resistance imposed by conical covers of the ballistic rebound plates 43, and the ink material particles are sucked into the heavy ink recycling apparatus 45 through the sucker fan 44 after rebounding along their rebound ballistic paths.

According to practical implementation of the embodiment, 200 g of waste A4 paper drawn and written with ball pens and sign pens is put into the fiber crusher 1, paper fibers of the paper are beaten through mutual rotation of the fixed knife 11 and the movable knife rotor 12 to obtain uniform dry fibers and extremely fine ink material particles, and frictional forces are imposed on the paper fibers during the process. Due to said frictional forces, the fibers and the ink material particles will generate a certain temperature W (read by a temperature sensor), wherein the temperature is below an ignition point of the fibers, but sufficient to allow preliminary break-down and loosening of the ink material particles. The accelerating fan 3 is used for feeding a mixture with a certain temperature W1 containing the dry fibers and the extremely fine ink material particles into the magnetic force difference coupled vibrator 2 through a conveying pipe 13. The magnetic conductive iron sheet 21 of the magnetic force difference coupled vibrator 2 generate a magnetic induction density with K quantity (magnetic density is controlled to be 100 mT-200 mT), and the magnetic fields are maintained by the continuous iron bars and coils 23. When weak magnetic mixture is treated with a magnetic force, a temperature of a treated object is increased, so that a viscosity of the treated object can be reduced, meanwhile, a temperature of the magnetic force difference coupled vibrator 2 is maintained by the temperature controllers 27 and the thermostats 28. The ink material particles in the mixture passing through the vibration domain 26-1 is affected by magnetic induction to generate normal mode vibration Z2, the magnetic conductive iron sheet 21 and the continuous iron bars and coils 23 at a front part of the magnetic force difference coupled vibrator 2 between the magnetic conductive iron sheet 21 and the homopolar near-frequency magnetic conductive iron sheet 24 are subject to a homopolar magnetic field L1, the homopolar near-frequency magnetic conductive iron sheet 24 and the continuous iron bars and coils 23 at a rear part of the magnetic force difference coupled vibrator 2 between the homopolar near-frequency magnetic conductive iron sheet 24 and the magnetic shielding structure 25 are subject to another homopolar magnetic field L2, L1 and L2 are homopolar near-frequency magnetic fields, when the ink material particles pass through the two magnetic fields with near frequencies, the ink material particles will receive perturbation due to the different normal mode vibration generated in the two magnetic fields, and thus subject to coupled vibration. At this moment, in the mixture of fibers and the ink material particles which have already been broken down and loosened, the spectral band of the ink material particles will be divided into two parts, or the spectral band of the ink material particles is divided into two parts due to their slitting with the fibers. The ink material particles are subject to coupled vibration due to normal mode vibration in the vibration domain, while the fibers continue to enter a next area according to the flowing path of the air flow. The magnetic shielding structure 25 magnetically shields the previous magnetic conductive iron sheet 21 and the homopolar near-frequency magnetic conductive iron sheet 24, such that the ink material particles are no longer subject to perturbation by different normal mode vibration in the two magnetic fields; the acceleration tube 41 is arranged in the middle part of the ballistic rebound sucker 4, and the ink material particles still vibrating in weak coupled vibration due to inertia and the fibers enter the ballistic rebound sucker 4 through the accelerating tube 41; the ink material particles accelerate forwards with inertia coupled vibration, while the fibers only accelerate to move parabolically under the action of gravity and the accelerated air flow created by the accelerating tube 41, and since the ink material particles are lighter than the fibers, the ink material particles and the fibers will be divided following perturbation and mutual impact and move in different paths, and by means of the sucker fan 44 and the printing ink rebound ballistic path baffles 42, the ink material particles accelerate forwards in a microwave form, with a frequency similar to the vibration frequency of the magnetic field L1. Three printing ink rebound ballistic path baffles 42 are used for blocking the air flow from advancing linearly and from moving parabolically, wherein when a flowing direction of the air flow carrying the ink material particles and fibers turns rapidly upon impact with the printing ink rebound ballistic path baffles 42, fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates 43 and the suction force by the sucker fan 44 arranged on the upper part of the ballistic rebound sucker 4, while ink particles which are lighter and not ascended as the ink particles described above and also remaining fibers are subjected to downward spiral sedimentation movement along the fiber resistance plate 46; further, flow directions of the ink material particles with inertia coupled vibration and the slight amount of fibers ascending to the upper part of the ballistic rebound sucker 4 are rapidly changed due to resistance of the conical covers of the ballistic rebound plates 43, and simultaneously, due to an increase in cross section of a flow of the ascending ink material particles with inertia coupled vibration mixed with the slight amount of fibers, a cross sectional flow rate of the flow of the ascending ink material particles with inertia coupled vibration mixed with the slight amount of fibers is reduced sharply, and so the slight amount of fibers are separated from the ink material particles with inertia coupled vibration under the action of gravity and drop onto the ballistic rebound plates 43 or the fiber resistance plate 46, allowing the ink material particles with inertia coupled vibration to continue to ascend; by means of the three ballistic rebound plates 43, the fibers and the ink material particles with inertia coupled vibration are preliminarily separated in the ballistic rebound sucker 4, and the ink material particles with inertia coupled vibration also enter the heavy ink recycling apparatus 45, and the fiber resistance plate 46 is arranged on a lower part of the ballistic rebound sucker 4, and the fiber resistance plate 46 enables the fibers to move parabolically and then to descend and spirally move to enter the material settling and conveying pipe 5; the descending fibers enter the cylindrical separator 6 through the material settling and conveying pipe 5, an air pressure in the cylindrical separator 6 is adjusted through the disc fan collector 61 arranged on the upper part of the cylindrical separator 6; by means of a centrifugal force, even lighter impurities or remaining ink material particles in the descending fibers are discharged and collected through the disc fan collector 61 arranged on the upper part of the cylindrical separator 6, while the descending fibers which are heavier than said impurities and the remaining ink material particles are settle and enter into the fiber discharge port 62 formed on the lower part of the cylindrical separator 6 and then being collected by the collector 63, and thus the fibers A-E with a higher purity are obtained.

### Embodiment 3:

Referring to FIGs. 1 and 2, provided is a device for separating printing inks and fibers by dry-process magnetic force difference coupled vibration, comprising a fiber crusher 1, a magnetic force difference coupled vibrator 2, an accelerating fan 3, a ballistic rebound sucker 4, a material settling and conveying pipe 5, and a cylindrical separator 6 which are sequentially connected through pipelines, wherein a magnetic conductive iron sheet 21, a homopolar near-frequency magnetic conductive iron sheet 24, and a magnetic shielding structure 25 which are sequentially connected through continuous iron bars and coils 23 are arranged in a center of a shell of the magnetic force difference coupled vibrator 2 from a fiber inlet 22 to a fiber outlet 29 of the shell, a vibration domain 26 is formed in an empty cavity in the shell of the magnetic force difference coupled vibrator 2, temperature controllers 27 and thermostats 28 are arranged on an outer side of the shell, a middle part of the ballistic rebound sucker 4 is connected to the accelerating fan 3 through an accelerating tube 41, printing ink rebound ballistic path baffles 42 and ballistic rebound plates 43 are arranged in sequence from a middle part of a shell of the ballistic rebound sucker 4 towards an upper part of the shell of the ballistic rebound sucker 4, a heavy ink recycling apparatus 45 communicates with an interior of the shell of the ballistic rebound sucker 4 through a sucker fan 44 disposed on the upper part of the shell of the ballistic rebound sucker 4, a fiber resistance plate 46 is downwardly arranged from the middle part of the shell of the ballistic rebound sucker 4, the cylindrical separator 6 communicates with the interior of the shell of the ballistic rebound sucker 4 through the material settling and conveying pipe 5, a disc fan collector 61 is arranged on an upper part of a shell of the cylindrical separator 6, a fiber discharge port 62 is formed on a lower part of the shell of the cylindrical separator 6, and the fiber discharge port 62 communicates with a collector 63.

In the embodiment, the fiber crusher 1 is a disc mill crusher having a fixed knife and a movable knife rotor inside, and uniform dry fibers and extremely fine ink material particles of the paper are obtained by beating effect through mutual rotation between the fixed knife 11 and the movable knife rotor 12 in the disc mill crusher.

In the embodiment, three printing ink rebound ballistic path baffles 42 are arranged in the ballistic rebound sucker 4, one or more of the printing ink rebound ballistic path baffles 42 block an air flow from advancing linearly and from moving parabolically, and as a flowing direction of the air flow carrying the ink material particles and fibers turns rapidly upon impact with one or more of the printing ink rebound ballistic path baffles 42, the ink material particles are allowed to be diverted to the ballistic rebound plates 43 along ballistic trajectories thereof.

In the embodiment, an upper part of the ballistic rebound sucker 4 is provided with three ballistic rebound plates 43, and the ballistic rebound plates 43 are designed according to a calculable motion trajectories of the ink material particles, such that flow directions of the ink material particles are rapidly changed due to resistance imposed by conical covers of the ballistic rebound plates 43, and the ink material particles are sucked into the heavy ink recycling apparatus 45 through the sucker fan 44 after rebounding along their rebound ballistic paths.

According to practical implementation of the embodiment, 200g of ink printed white cardboard and 200 g of waste A4 paper drawn and written with ball pens and sign pens are put into the fiber crusher 1, paper fibers of the paper are beaten through mutual rotation of the fixed knife 11 and the movable knife rotor 12 to obtain uniform dry fibers and extremely fine ink material particles, and frictional forces are imposed on the paper fibers during the process. Due to said frictional forces, the fibers and the ink material particles will generate a certain temperature W (read by a temperature sensor), wherein the temperature is below an ignition point of the fibers, but sufficient to allow preliminary break-down and loosening of the ink material particles. The accelerating fan 3 is used for feeding a mixture with a certain temperature W1 containing the dry fibers and the extremely fine ink material particles into the magnetic force difference coupled vibrator 2 through a conveying pipe 13. The magnetic conductive iron sheet 21 of the magnetic force difference coupled vibrator 2 generates a magnetic induction density with K quantity (magnetic density is controlled to be 100 mT-200 mT), and the magnetic fields are maintained by the continuous iron bars and coils 23. When weak magnetic mixture is treated with a magnetic force, a temperature of a treated object is increased, so that a viscosity of the treated object can be reduced, meanwhile, a temperature of the magnetic force difference coupled vibrator 2 is maintained by the temperature controllers 27 and the thermostats 28. The ink material particles in the mixture passing through the vibration domain 26-1 is affected by magnetic induction to generate normal mode vibration Z3, the magnetic conductive iron sheet 21 and the continuous iron bars and coils 23 at a front part of the magnetic force difference coupled vibrator 2 between the magnetic conductive iron sheet 21 and the homopolar near-frequency magnetic conductive iron sheet 24 are subject to a homopolar magnetic field L1, the homopolar near-frequency magnetic conductive iron sheet 24 and the continuous iron bars and coils 23 at a rear part of the magnetic force difference coupled vibrator 2 between the homopolar near-frequency magnetic conductive iron sheet 24 and the magnetic shielding structure 25 are subject to another homopolar magnetic field L2, L1 and L2 are homopolar near-frequency magnetic fields, when the ink material particles pass through the two magnetic fields with near frequencies, the ink material particles will receive perturbation due to the different normal mode vibration generated in the two magnetic fields, and thus subject to coupled vibration. At this moment, in the mixture of fibers and the ink material particles which have already been broken down and loosened, the spectral band of the ink material particles will be divided into two parts, or the spectral band of the ink material particles is divided into two parts due to their slitting with the fibers. The ink material particles are subject to coupled vibration due to normal mode vibration in the vibration domain, while the fibers continue to enter a next area according to the flowing path of the air flow. The magnetic shielding structure 25 magnetically shields the previous magnetic conductive iron sheet 21 and the homopolar near-frequency magnetic conductive iron sheet 24, such that the ink material particles are no longer subject to perturbation by different normal mode vibration in the two magnetic fields; the acceleration tube 41 is arranged in the middle part of the ballistic rebound sucker 4, and the ink material particles still vibrating in weak coupled vibration due to inertia and the fibers enter the ballistic rebound sucker 4 through the accelerating tube 41; the ink material particles accelerate forwards with inertia coupled vibration, while the fibers only accelerate to move parabolically under the action of gravity and the accelerated air flow created by the accelerating tube 41, and since the ink material particles are lighter than the fibers, the ink material particles and the fibers will be divided following perturbation and mutual impact and move in different paths, and by means of the sucker fan 44 and the printing ink rebound ballistic path baffles 42, the ink material particles accelerate forwards in a microwave form, with a frequency similar to the vibration frequency of the magnetic field L1. One or more printing ink rebound ballistic path baffles 42 are used for blocking the air flow from advancing linearly and from moving parabolically, wherein when a flowing direction of the air flow carrying the ink material particles and fibers turns rapidly upon impact with the printing ink rebound ballistic path baffles 42, fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates 43 and the suction force by the sucker fan 44 arranged on the upper part of the ballistic rebound sucker 4, while ink particles which are lighter and not ascended as the ink particles described above and also remaining fibers are subjected to downward spiral sedimentation movement along the fiber resistance plate 46; further, flow directions of the ink material particles with inertia coupled vibration and the slight amount of fibers ascending to the upper part of the ballistic rebound sucker 4 are rapidly changed due to resistance of the conical covers of the ballistic rebound plates 43, and simultaneously, due to an increase in cross section of a flow of the ascending ink material particles with inertia coupled vibration mixed with the slight amount of fibers, a cross sectional flow rate of the flow of the ascending ink material particles with inertia coupled vibration mixed with the slight amount of fibers is reduced sharply, and so the slight amount of fibers are separated from the ink material particles with inertia coupled vibration under the action of gravity and drop onto the ballistic rebound plates 43 or the fiber resistance plate 46, allowing the ink material particles with inertia coupled vibration to continue to ascend; by means of the one or more ballistic rebound plates 43, the fibers and the ink material particles with inertia coupled vibration are preliminarily separated in the ballistic rebound sucker 4, and the ink material particles with inertia coupled vibration also enter the heavy ink recycling apparatus 45, and the fiber resistance plate 46 is arranged on a lower part of the ballistic rebound sucker 4, and the fiber resistance plate 46 enables the fibers to move parabolically and then to descend and spirally move to enter the material settling and conveying pipe 5; the descending fibers enter the cylindrical separator 6 through the material settling and conveying pipe 5, an air pressure in the cylindrical separator 6 is adjusted through the disc fan collector 61 arranged on the upper part of the cylindrical separator 6; by means of a centrifugal force, even lighter impurities or remaining ink material particles in the descending fibers are discharged and collected through the disc fan collector 61 arranged on the upper part of the cylindrical separator 6, while the descending fibers which are heavier than said impurities and the remaining ink material particles are settle and enter into the fiber discharge port 62 formed on the lower part of the cylindrical separator 6 and then being collected by the collector 63, and thus the fibers A-E with a higher purity are obtained.

The resulting fibers obtained in the embodiments are made into sheets, and then tested by a whiteness tester and a chromatograph analyzer, and the test results are shown in FIG. 3.

### Embodiment 4:

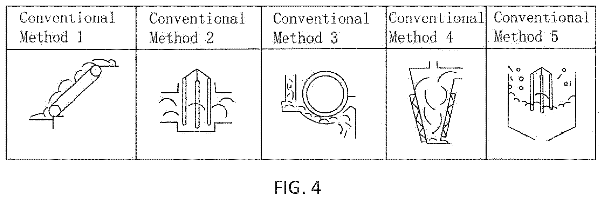

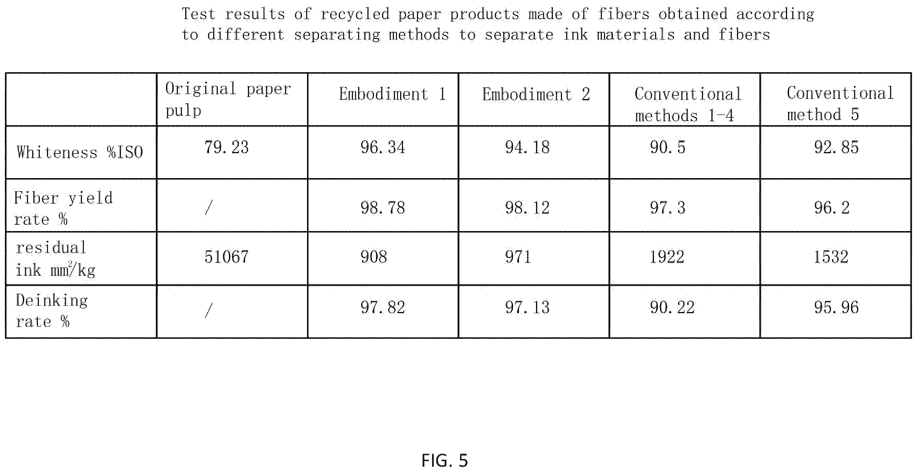

Ink materials and fibers in paper pulp are separated by using conventional magnetic ink adsorption methods. In a first conventional method, the paper pulp containing the ink materials passes through a conveyor belt where a magnetic apparatus is provided transversely with respect to the conveyor belt or provided inside the conveyor belt, and so the ink materials are adsorbed onto the conveyor belt when the paper pulp passes through the conveyor belt, and a scraper or a demagnetizer is arranged at the downstream of the flow of the paper pulp, so that the ink materials are separated from the paper pulp; in a second conventional method, the paper pulp containing the ink materials flows in the T-shaped pipeline, magnetic stirring rods are arranged at the T-shaped portion of the T-shaped pipeline, and the ink materials are adsorbed onto the stirring rods when the paper pulp containing the ink materials passes through the magnetic stirring rods, so that the ink materials are separated from the paper pulp; in a third conventional method, the paper pulp containing the ink materials flows in a water tank, a magnetic roller is arranged on the water tank and the paper pulp containing the ink materials flows below the magnetic roller, and a scraper or a demagnetizer is arranged at one point of the magnetic roller corresponding to a point where the paper pulp containing the ink materials flows away from the magnetic roller to remove the ink materials adsorbed on the magnetic roller above the flowing paper pulp, so that the ink materials are separated from the paper pulp; in a fourth conventional method, the paper pulp containing the ink materials passes through a conical barrel in which centrifugal force is applied, and a magnetic force generating apparatus is arranged on the outer wall of the conical barrel to adsorb the ink materials in the conical barrel onto the wall of the conical barrel; in a fifth conventional method, magnetite particles (or silicon iron, artificial ferrite particles or magnetic fluid), sodium hydroxide and sodium silicate are added into the paper pulp containing the ink materials, and the mixture is stirred, and after flotation, the ink materials are separated from the fibers. The above five conventional methods are briefly illustrated in FIG. 4. The resulting fibers obtained according to Embodiments 1-4 are made into paper and subjected to a comparative test by using a whiteness tester and a chromatograph analyzer, and the comparative results are shown in FIG. 5.

As can be seen from FIG. 5, compared with the conventional waste paper recycling devices, the paper obtained by the present invention has higher whiteness, lower concentration of residual ink, higher yield rate, higher production efficiency and shorter paper production time. The present invention occupies less space and has lower manufacturing cost, and paper can be produced directly using the fibers obtained according to a method and device for separating ink molecules and coloring material molecules from fibers by magnetic force difference coupled vibration. Although the present invention has been described in detail above with reference to the detailed description part, it will be apparent to those skilled in the art that modifications or improvements can be made based on the present invention. Accordingly, all such modifications or improvements made without departing from the spirit of the present invention shall fall within the protection scope of the present invention.

## Claims

1. A device for separating printing inks and fibers by dry-process magnetic force difference coupled vibration, comprising a fiber crusher (1), a magnetic force difference coupled vibrator (2), an accelerating fan (3), a ballistic rebound sucker (4), a material settling and conveying pipe (5), and a cylindrical separator (6) which are sequentially connected through pipelines, wherein a magnetic conductive iron sheet (21), a homopolar near-frequency magnetic conductive iron sheet (24), and a magnetic shielding structure (25) which are sequentially connected through continuous iron bars and coils (23) are arranged in a center of a shell of the magnetic force difference coupled vibrator (2) from a fiber inlet (22) to a fiber outlet (29) of the shell of the magnetic force difference coupled vibrator (2); a vibration domain (26) is formed in an empty cavity in the shell of the magnetic force difference coupled vibrator (2); temperature controllers (27) and thermostats (28) are arranged on an outer side of the shell of the magnetic force difference coupled vibrator (2); a middle part of the ballistic rebound sucker (4) is connected to the accelerating fan (3) through an accelerating tube (41); printing ink rebound ballistic path baffles (42) and ballistic rebound plates (43) are arranged in sequence from a middle part of a shell of the ballistic rebound sucker (4) towards an upper part of the shell of the ballistic rebound sucker (4); a heavy ink recycling apparatus (45) communicates with an interior of the shell of the ballistic rebound sucker (4) through a sucker fan (44) disposed on the upper part of the shell of the ballistic rebound sucker (4); a fiber resistance plate (46) is downwardly arranged from the middle part of the shell of the ballistic rebound sucker (4); the cylindrical separator (6) communicates with the interior of the shell of the ballistic rebound sucker (4) through the material settling and conveying pipe (5); a disc fan collector (61) is arranged on an upper part of a shell of the cylindrical separator (6); a fiber discharge port (62) is formed on a lower part of the shell of the cylindrical separator (6), and the fiber discharge port (62) communicates with a collector (63).

2. The device of claim 1, wherein the fiber crusher (1) is a disc mill crusher having a fixed knife (11) and a movable knife rotor (12) inside the disc mill crusher.

3. The device of claim 1, wherein more than two of said printing ink rebound ballistic path baffles (42) are arranged in the ballistic rebound sucker (4).

4. The device of claim 1, wherein more than two of said ballistic rebound plates (43) are arranged on the upper part of the shell of the ballistic rebound sucker (4).

5. A method for separating printing inks from fibers by dry-process magnetic force difference coupled vibration, comprising the following steps:
step 1, putting waste paper products into a fiber crusher (1) to crush the waste paper products;
step 2, feeding the waste paper products crushed being a mixture of fibers and ink material particles into a magnetic force difference coupled vibrator (2) through a conveying pipe (13) and an accelerating fan (3), wherein the magnetic force difference coupled vibrator (2) is provided with a fiber inlet (22) which is connected to the fiber crusher (1) through the conveying pipe (13);
step 3, subjecting the ink material particles in the mixture to magnetic forces created by a magnetic conductive iron sheet (21) disposed inside the magnetic force difference coupled vibrator (2) and thus generate normal mode vibration when the mixture passes through the magnetic conductive iron sheet (21) , wherein:
the magnetic conductive iron sheet (21) give out magnetic fields of K quantity respectively; the magnetic conductive iron sheet (21) and the continuous iron bars and coils (23) at a front part of the magnetic force difference coupled vibrator (2) between the magnetic conductive iron sheet (21) and the homopolar near-frequency magnetic conductive iron sheet (24) are subject to a homopolar magnetic field L1; the homopolar near-frequency magnetic conductive iron sheet 24 and the continuous iron bars and coils (23) at a rear part of the magnetic force difference coupled vibrator (2) between the homopolar near-frequency magnetic conductive iron sheet (24) and the magnetic shielding structure (25) are subject to another homopolar magnetic field L2; L1 and L2 are homopolar near-frequency magnetic fields; when the ink material particles pass through the magnetic fields (L1 and L2) with near frequencies, the ink material particles are subject to coupled vibration in a vibration domain (26) inside the magnetic force difference coupled vibrator (2);
also arranging temperature controllers (27) and thermostats (28) on an outer side of a shell of the magnetic force difference coupled vibrator (2) to maintain a temperature of the magnetic force difference coupled vibrator (2), wherein when a weak magnetic mixture is treated with a magnetic force, a temperature of a treated object is increased, so that a viscosity of the treated object can be reduced; the ink material particles are subject to coupled vibration due to normal mode vibration generated by the magnetic fields in the vibration domain (26), while the fibers continue to enter a magnetic shielding structure (25) according to a flowing path of air flow.
step 4, magnetically shielding, by the magnetic shielding structure (25), the magnetic conductive iron sheet (21), such that the ink material particles are no longer subject to perturbation by different normal mode vibration in the magnetic fields, but the coupled vibration of the ink material particles are partially maintained due to inertia; also arranging an acceleration tube (41) in a middle part of a ballistic rebound sucker (4), and the ink material particles still partially subject to coupled vibration due to inertia and the fibers enter the ballistic rebound sucker (4) through the accelerating tube (41); in the ballistic rebound sucker (4), due to a sucker fan (44) and printing ink rebound ballistic path baffles (42) arranged on an upper part of the ballistic rebound sucker (4), the air flow is blocked from advancing linearly and from moving parabolically by using the printing ink rebound ballistic path baffles (42), when a flowing direction of the air flow carrying the ink material particles and the fibers turns rapidly upon impact with the printing ink rebound ballistic path baffles (42), fibers insufficiently driven to turn with the air flow will mostly descend in a spiral gravity under inertial force, while ink material particles lighter than the fibers and accelerated forwards with inertia coupled vibration will ascend together with a slight amount of fibers due to the ballistic rebound plates (43) and suction force of the sucker fan (44) arranged on the upper part of the ballistic rebound sucker (4), while ink material particles which are lighter compared with ascended ink material particles and remaining fibers are subjected to downward spiral sedimentation movement along a fiber resistance plate (46) provided inside the ballistic rebound sucker (4); further, flow directions of the ink material particles with inertia coupled vibration and the slight amount of fibers ascending to the upper part of the ballistic rebound sucker (4) are rapidly changed due to resistance of conical covers of the ballistic rebound plates (43), and simultaneously, due to an increase in cross section of a flow of the ascended ink material particles with inertia coupled vibration mixed with the slight amount of fibers, a cross sectional flow rate of the flow of the ascended ink material particles with inertia coupled vibration mixed with the slight amount of fibers is reduced sharply, and so the slight amount of fibers are then separated from the ascended ink material particles with inertia coupled vibration under gravity and drop onto the ballistic rebound plates (43) or the fiber resistance plate (46), thus allowing the ascended ink material particles with inertia coupled vibration to continue to ascend; wherein use of the ballistic rebound plates (43) separates the fibers from the ink material particles in the ballistic rebound sucker (4); and
step 5, collecting the ascended ink material particles with inertia coupled vibration in a heavy ink recycling apparatus (45), while descending fibers enters a cylindrical separator (6) through a material settling and conveying pipe (5); adjusting an air pressure in the cylindrical separator (6) through a disc fan collector (61) arranged on an upper part of the cylindrical separator (6); by centrifugal force in the cylindrical separator (6), discharging impurities or materials in the descending fibers which are lighter than the descending fibers through the disc fan collector (61) arranged on the upper part of the cylindrical separator (6); and settling the descending fibers which are heavier than said impurities or materials in the descending fibers into a lower fiber discharge port (62), wherein a whole process from said step 1 to step 5 is carried out in a dry environment, and thus resulting in fibers being obtained after step 5 with a higher purity.
